# EUROPÄISCHE PATENTSCHRIFT

(11) **EP 2 984 027 B1**
(45) Veröffentlichungstag und Bekanntmachung des Hinweises auf die Patenterteilung: **06.09.2017**
(21) Anmeldenummer: 14723673.1
(22) Anmeldetag: 31.03.2014
(51) Int. Cl.: B66F 9/07, G05D 1/02

(54) **VERFAHREN ZUM STEUERN EINES REGALBEDIENGERÄTS**
METHOD FOR CONTROLLING A RACK OPERATING DEVICE
PROCÉDÉ DE COMMANDE D'UN TRANSTOCKEUR

(30) Priorität: 08.04.2013 AT 502362013
(43) Veröffentlichungstag der Anmeldung: 17.02.2016
(73) Patentinhaber: Berger, Benjamin, 5280 Braunau (AT)
(72) Erfinder: Berger, Benjamin, 5280 Braunau (AT)
(74) Vertreter: Patentanwaltskanzlei Hübscher
(86) Internationale Anmeldenummer: PCT/AT2014/050079
(87) Internationale Veröffentlichungsnummer: WO 2014/165883

(56) Entgegenhaltungen:
- EP-A1- 1 193 194
- WO-A1-97/19889
- CH-A5- 631 939
- JP-A- 2007 204 225
- JP-A- 2011 093 676

## Beschreibung

### Technisches Gebiet

Die Erfindung bezieht sich auf ein Verfahren zum Steuern eines Regalbediengeräts, das ein einen Mast tragendes Fahrgestell mit einem Fahrantrieb, eine entlang des Masts mit Hilfe eines Hubantriebs verfahrbare Lastaufnahme und eine Steuereinrichtung für den Fahr- und den Hubantrieb umfasst, wobei der Fahr- und der Hubantrieb mit das dynamische Verhalten des Regalbediengeräts berücksichtigenden Sollwerten zur Verlagerung des Fahrgestells und der Lastaufnahme entsprechend der durch die jeweilige Ausgangs- und Endlage sowie die jeweilige Last bestimmten Vorgaben angesteuert wird.

### Stand der Technik

Um die durch das Beschleunigen und Verzögern des Fahrgestells und der Lastaufnahme angeregten dynamischen Verformungen, insbesondere die Schwingungen des Masts, bereits während der Verlagerung des Fahrgestells und der Lastaufnahme von der jeweiligen Ausgangslage zur vorgegebenen Endlage berücksichtigen zu können und damit die jeweilige Endlage möglichst schwingungsfrei anfahren zu können, ist es bereits bekannt (EP 1 859 327 B1), flachheitsbasierte Referenztrajektorien für Regalbediengeräten als mathematische Funktion einerseits für den Fahrantrieb und anderseits für den Hubantrieb abzuspeichern, wobei die Referenztrajektorien einen zeitlichen Verlauf des dynamischen Verhaltens des Regalbediengeräts in Form eines mathematischen Gleichungssystems beschreiben. Aufgrund zusätzlicher Vorgaben für mechanische und dynamische Grenzwerte, beispielsweise das maximal zulässige Biegemoment im Mastfußbereich, die maximal zulässige Last für die Lastaufnahme, die maximale Schwingungsauslenkung der Mastspitze oder die maximale Stellkraft für den Fahr-/ und den Hubantrieb, können dann aus den Referenztrajektorien die für die Steuerung der Fahr- und Hubantriebe benötigten Sollwerte unter Vorgabe der jeweiligen Ausgangs- und Endlagen berechnet werden. Nachteilig bei diesen bekannten Verfahren zur flachheitsbasierten Steuerung eines Regalbediengeräts ist vor allem, dass mit Hilfe der flachheitsbasierten Steuerung keine Referenztrajektorien vorgegeben werden können, die das dynamische Verhalten des Regalbediengeräts ausreichend genau beschreiben. Aus diesem Grunde müssen im mathematischen Modell der Referenztrajektorien nicht berücksichtigbare Störeinflüsse, die zu Abweichungen der auf den Fahr- und Hubantrieb einwirkenden Stellkräfte führen können, korrigiert und der zeitliche Verlauf der tatsächlich erforderlichen Stellkräfte angepasst werden, was zusätzliche Einrichtungen für die Istwerterfassung sowie eine Folgesteuerung zur Sollwertkorrektur mit dem Nachteil bedingt, dass auftretende Schwingungen wiederum nur gedämpft werden können, wenn auch ohne gesonderte Dämpfungseinrichtungen.

### Darstellung der Erfindung

Der Erfindung liegt somit die Aufgabe zugrunde, ein Verfahren zum Steuern eines Regalbediengeräts so auszugestalten, dass das dynamische Verhalten des Regalbediengeräts vorteilhaft für die Verlagerung des Fahrgestells und der Lastaufnahme von einer Ausgangslage in eine Endlage genützt werden kann, ohne das sonst notwendige Abklingen von Schwingungen abwarten zu müssen.

Ausgehend von einem Verfahren der eingangs geschilderten Art löst die Erfindung die gestellte Aufgabe dadurch, dass die für die Steuerung der Fahr- und Hubantriebe entsprechend den Vorgaben benötigten Sollwerte numerisch anhand eines Simulationsmodells des Regalbediengeräts für alle Vorgabenkombinationen berechnet und unter Zuordnung zu den einzelnen Vorgabenkombinationen tabellarisch abgespeichert werden und dass zur Verlagerung des Fahrgestells und der Lastaufnahme entsprechend einer Vorgabenkombination die Steuereinrichtung die Fahr- und Hubantriebe mit den für diese Vorgabenkombination tabellarisch abgespeicherten Sollwerten ansteuert.

Durch eine numerische Berechnung eines entsprechenden Simulationsmodells des Regalbediengeräts vorzugsweise mit Hilfe eines Rechenclusters kann das dynamische Verhalten des Regalbediengeräts beim Verlagern der Lastaufnahme von einer Ausgangslage in eine Endlage für eine bestimmte Last ausreichend genau beschrieben werden, um daraus die für die Ansteuerung des Fahr- und des Hubantriebs erforderlichen Sollwerte berechnen zu können. Mit diesen Sollwerten für die Steuerung der Fahr- und Hubantriebe kann daher das Regalbediengerät so verlagert werden, dass die Lastaufnahme mit einer bestimmten Last optimiert von der vorgegebenen Ausgangslage in die vorgegebene Endlage bewegt wird, ohne das Abklingen von Schwingungen für das Aus- oder Einlagern der Last abwarten zu müssen. Voraussetzung ist somit, dass alle Ausgangs- und Endlagen sowie die möglichen Lasten durch eine entsprechende Kombination dieser Vorgaben berücksichtigt werden und folglich für jeden Fall dieser Vorgaben Sollwerte für die Steuerung des Regalbediengeräts vorliegen. Für die Steuerung des Regalbediengeräts brauchen daher nur aus den für die einzelnen Vorgabenkombinationen tabellarisch abgelegten Sollwerten die der jeweiligen Vorgabenkombination entsprechenden Sollwerte ausgelesen und der Steuerung des Fahrantriebs und des Hubantriebs zur Verfügung gestellt werden. Weil die Anzahl der abzulegenden Vorgabekombinationen bei üblichen Regalsystemen zwischen mehreren hunderttausend und wenigen Millionen von Datensätzen liegt, kann die Berechnung der Sollwerte für diese Vorgabekombinationen vorzugsweise mit Hilfe eines Rechenclusters durchgeführt werden.

Da bestimmte Randbedingungen sich auf das Steuerverhalten auswirken, weil beispielsweise die Forderung nach einem geringen Energiebedarf für die Fahr- und Hubantriebe der Forderung nach einer kurzen Verlagerungszeit entgegensteht und die Beschränkung der Belastung insbesondere des Masts wiederum andere Sollwerte für die Steuerung des Regalbediengeräts bedingt, können die Sollwerte der einzelnen Vorgabenkombinationen für unterschiedliche Randbedingungen berechnet und entsprechend abgespeichert werden, sodass die daraus für die einzelnen Randbedingungen ermittelten Sollwerte für eine unterschiedliche Steuerung des Regalbediengeräts zur Verfügung stehen, was einen unterschiedlichen, an die jeweiligen Randbedingungen angepassten Einsatz des Regalbediengeräts erlaubt.

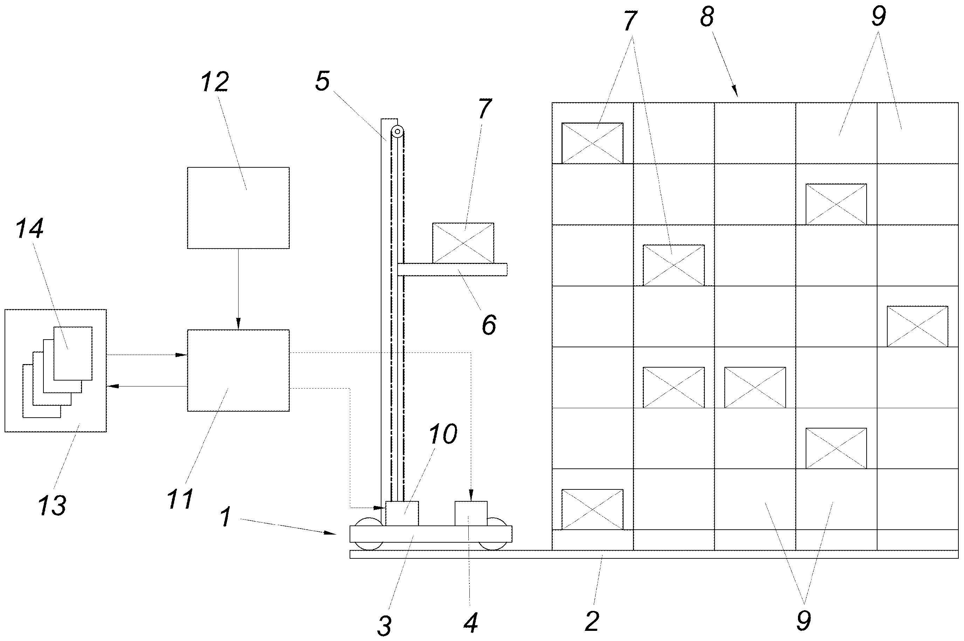

### Kurze Beschreibung der Zeichnung

In der Zeichnung ist der Erfindungsgegenstand beispielsweise dargestellt, und zwar wird das erfindungsgemäße Verfahren anhand eines schematischen Blockschaltbilds für die Steuerung eines Regalbediengeräts näher erläutert.

### Weg zur Ausführung der Erfindung

Das schematisch dargestellte Regalbediengerät 1 weist ein entlang einer Führung 2 verfahrbares Fahrgestell 3 auf, dessen Fahrantrieb mit 4 bezeichnet ist. Auf dem Fahrgestell 3 ist ein Mast 5 gelagert, der eine entlang des Masts 5 verschiebbare Lastaufnahme 6 für Lasten 7 aufweist, die in wenigstens ein Hochregal 8 ein- und ausgelagert werden. Die Regalfächer 9, die üblicherweise ein aus Zeilen und Spalten gebildetes Raster bilden, stellen Ausgangs- und Endlagen für die Lastaufnahme 6 dar, wobei wenigstens eine Übernahmestelle außerhalb des Hochregals 8 eine weitere Ausgangs- bzw. Endlage für die Steuerung des Regalbediengeräts 1 ergibt. Zum Verlagern der Lastaufnahme 6 der Höhe nach dient ein Hubantrieb 10. Der Hubantrieb 10 für die Lastaufnahme 6 sowie der Fahrantrieb 4 für das Fahrgestell 3 werden über eine Steuereinrichtung 11 angesteuert, die einerseits an eine Eingabeeinheit 12 und anderseits an einen Sollwertspeicher 13 angeschlossen ist. Über die Eingabeeinheit 12 werden insbesondere die jeweiligen Ausgangs- und Endlagen sowie die jeweilige Last der Steuereinrichtung 11 vorgegeben.

Die für das Verlagern der Lastaufnahme 6 zwischen einer Ausgangs- und einer Endstellung benötigten Sollwerte zur Ansteuerung des Fahrantriebs 4 und des Hubantriebs 10 werden vorzugsweise mit Hilfe eines Rechenclusters anhand eines Simulationsmodells für das Regalbediengerät 1 unter Berücksichtigung des dynamischen Verhaltens des Regalbediengeräts 1 für unterschiedliche Lasten 7 berechnet. Da für jede der möglichen Vorgaben hinsichtlich der Ausgangs- und Endlage sowie der Last ein Satz von Sollwerten zur Verfügung gestellt werden muss, damit das Regalbediengerät 1 entsprechend den jeweiligen Vorgaben gesteuert werden kann, müssen die Sollwerte für alle diese Vorgabenkombinationen ermittelt und tabellarisch im Sollwertspeicher 13 abgespeichert werden. Die einzelnen Sollwerttabellen 14 für jede der Vorgabenkombinationen sind im Sollwertspeicher 13 angedeutet.

Da zusätzlich unterschiedliche Randbedingungen zu berücksichtigen sein können, sind die Sollwerte für diese unterschiedlichen Randbedingungen aller Vorgabenkombinationen zu berechnen und abzuspeichern. Damit kann eine zeitminimierte Verlagerung der Lastaufnahme 6 zwischen einer bestimmten Ausgangslage und einer Endlage unter Berücksichtigung beispielsweise des Energieverbrauchs und der Belastung des Regalbediengeräts 1 vorgegeben werden. Aufgrund der entsprechenden Berücksichtigung des dynamischen Verhaltens des Regalbediengeräts 1 bei dessen Steuerung kann auch auf die Konstruktion des Regalbediengeräts 1 im Sinne einer leichteren Bauweise Einfluss genommen werden, weil eben größere Schwingungsneigungen durch die Steuerung berücksichtigt werden können, ohne die sonst damit verbundenen Nachteile in Kauf nehmen zu müssen.

## Patentansprüche

1. Verfahren zum Steuern eines Regalbediengeräts (1), das ein einen Mast (5) tragendes Fahrgestell (3) mit einem Fahrantrieb (4), eine entlang des Masts (5) mit Hilfe eines Hubantriebs (10) verfahrbare Lastaufnahme (6) und eine Steuereinrichtung (11) für den Fahr- und den Hubantrieb (4, 10) umfasst, wobei der Fahr- und der Hubantrieb (4, 10) mit das dynamische Verhalten des Regalbediengeräts (1) berücksichtigenden Sollwerten zur Verlagerung des Fahrgestells (3) und der Lastaufnahme (6) entsprechend der durch die jeweilige Ausgangs- und Endlage sowie die jeweilige Last (7) bestimmten Vorgaben angesteuert wird, **dadurch gekennzeichnet, dass** die für die Steuerung der Fahr- und Hubantriebe (4, 10) entsprechend den Vorgaben benötigten Sollwerte numerisch anhand eines Simulationsmodells des Regalbediengeräts (1) für alle Vorgabenkombinationen berechnet und unter Zuordnung zu den einzelnen Vorgabenkombinationen tabellarisch abgespeichert werden und dass zur Verlagerung des Fahrgestells (3) und der Lastaufnahme (6) entsprechend einer Vorgabenkombination die Steuereinrichtung (11) die Fahr- und Hubantriebe (4, 10) mit den für diese Vorgabenkombination tabellarisch abgespeicherten Sollwerten ansteuert.

2. Verfahren nach Anspruch 1, **dadurch gekennzeichnet, dass** die Sollwerte der einzelnen Vorgabenkombinationen für unterschiedliche Randbedingungen, wie geringer Energieverbrauch, kurze Verlagerungszeiten oder maximale Belastbarkeit, berechnet werden.

## Claims

1. Method for controlling a rack serving apparatus (1) which comprises a travel mechanism (3), which supports a mast (5) and has a travel drive (4), a load picking-up means (6), which can travel along the mast (5) with the aid of a lifting drive (10), and a control device (11) for the travel and lifting drive (4, 10), wherein the travel and lifting drive (4, 10) is actuated with target values, which take account of the dynamic behaviour of the rack serving apparatus (1), for displacement of the travel mechanism (3) and the load picking-up means (6) according to the parameters determined by the respective starting and end position and the respective load (7), **characterised in that** the target values required for control of the travel and lifting drives (4, 10) according to the parameters are calculated numerically with the aid of a simulation model of the rack serving apparatus (1) for all parameter combinations and are stored in tabular form with allocation to the individual parameter combinations, and **in that** in order to displace the travel mechanism (3) and the load picking-up means (6) according to a parameter combination the control device (11) actuates the travel and lifting drives (4, 10) with the target values stored in tabular form for this parameter combination.

2. Method as claimed in claim 1, **characterised in that** the target values of the individual parameter combinations are calculated for different boundary conditions, such as low energy consumption, short displacement times or maximum load-bearing capability.

## Revendications

1. Procédé de commande d'un appareil de gestion d'étagères de stockage (1), comprenant une structure mobile (3) avec des moyens d'entraînement (4) portant un mât (5), un élément porteur de charge (6) mobile le long du mât (5), grâce à un entraînement de levage (10) et une installation de pilotage (11) pour les moyens d'entraînement et de levage (4, 10), dans lequel les moyens d'entraînement et de levage (4, 10), sont pilotés en respectant les valeurs de référence pour assurer le comportement dynamique de l'appareil de gestion d'étagères de stockage (1), lors du stockage et déstockage de la structure mobile (3) et de l'élément porteur de charge (6), déterminé en fonction des données finales ainsi que de la charge respective (7) correspondant aux données prédéterminées, **caractérisé en ce que** le pilotage des moyens d'entraînement et de levage (4, 10) selon les données prédéterminées, nécessite le calcul de valeurs de référence numériques, en fonction d'un modèle de simulation de l'appareil de gestion d'étagères de stockage (1), pour toutes les combinaisons de données prédéterminées et la mise à disposition de tableaux de combinaisons de données prédéterminées mémorisées, et **en ce que** le stockage et le déstockage de la structure mobile (3), et l'élément porteur de charge (6), les moyens d'entraînement (4) et les moyens de levage (10), en fonction d'une combinaison de données prédéterminées de l'installation de pilotage (11), sont commandés, avec les valeurs prédéterminées correspondant à la combinaison de données prédéterminées, mémorisée sur tableaux numériques.

2. Procédé selon la revendication 1, **caractérisé en ce que** les valeurs de référence des combinaisons individuelles de données sont calculées pour déterminer diverses conditions limites, comme la consommation minimale d'énergie, des durées de stockage courtes ou une mise en charge maximale.
